# EUROPEAN PATENT APPLICATION

(11) **EP 4 832 315 A1**
(43) Date of publication of application: **28.10.2026**
(21) Application number: 26169050.7
(22) Date of filing: 30.03.2026
(51) Int. Cl.: H02K 11/33, B60K 1/00, H02K 5/22, H02K 7/00, B60K 1/04, H02K 5/20

(54) **VEHICLE DRIVE UNIT**

(30) Priority: 11.04.2025 JP 2025065405
(71) Applicant: Suzuki Motor Corporation, Hamamatsu-shi, Shizuoka 432-8611 (JP)
(72) Inventor: NARA, Tomonobu, Shizuoka, 432-8611 (JP)
(74) Representative: Haseltine Lake Kempner LLP

(57) **Abstract**

A vehicle drive unit 10 includes: an electric motor 12 including a motor shaft 35 extending in a vehicle front-back direction; a case 31 including a motor housing section 41 having a substantially cylindrical shape, the motor housing section 41 being for housing the electric motor 12; an inverter circuit 46 that is electrically connected to the electric motor 12; an inverter case 47 having a substantially cuboid shape and placed next to one outer side of the motor housing section 41 in a vehicle width direction, the inverter case 47 being for housing the inverter circuit 46; and a first pipe connection section 49, provided on the inverter case 47, to which a cooling water inlet pipe IP where cooling water flows is connected. The first pipe connection section 49 is positioned in a wedge-shaped space S created between the motor housing section 41 and the inverter case 47.

## Description

### BACKGROUND OF THE INVENTION

### Field of the Invention

Embodiments of the present invention relate to a vehicle drive unit.

### Description of the Related Art

There is known a drive unit that is mounted on an electric vehicle, and that is aimed at improving maintainability. The drive unit includes a rotating electric machine having a rotation axis extending in a horizontal direction, a rotating electric machine case including a rotating electric machine accommodation portion for accommodating the rotating electric machine, and a power conversion device electrically connected to the rotating electric machine and configured to convert electric power supplied to the rotating electric machine and electric power supplied from the rotating electric machine. With the drive unit, a position of an uppermost end of the power conversion device is lower than a position of an uppermost end of the rotating electric machine case.

[Patent Document 1] JP 2021-010268 A

Generally, pipes and wiring are connected to a drive unit adopted by electric and hybrid vehicles. A certain space is necessary to route the pipes and the wiring. Accordingly, because of the pipes and wiring connected to the drive unit, mountability of the drive unit on a vehicle may be reduced.

### SUMMARY OF THE INVENTION

Accordingly, the present invention aims at providing a vehicle drive unit having excellent mountability on a vehicle.

To solve the problems, a vehicle drive unit according to an embodiment of the present invention includes: an electric motor including a motor shaft extending in a vehicle front-back direction; a case including a motor housing section having a substantially cylindrical shape, the motor housing section being for housing the electric motor; an inverter circuit that is electrically connected to the electric motor; an inverter case having a substantially cuboid shape and placed next to one outer side of the motor housing section in a vehicle width direction, the inverter case being for housing the inverter circuit; and a first pipe connection section, provided on the inverter case, to which a cooling water inlet pipe where cooling water flows is connected. The first pipe connection section is positioned in a wedge-shaped space created between the motor housing section and the inverter case.

### EFFECTS OF THE INVENTION

The present invention can provide a vehicle drive unit having excellent mountability on a vehicle.

### BRIEF DESCRIPTION OF THE DRAWINGS

Fig. 1A is a side view of a truck-type vehicle where a vehicle drive unit according to an embodiment of the present invention is mounted;
Fig. 1B is a schematic enlarged side view showing the vehicle drive unit in Fig. 1A and its periphery;
Fig. 2 is a schematic perspective view showing an external appearance of a drive mechanism that is mounted on the vehicle shown in Figs. 1A and 1B;
Fig. 3 is a schematic front view of the vehicle drive unit according to the embodiment of the present invention;
Fig. 4 is a schematic cross-sectional front view of the vehicle drive unit according to the embodiment of the present invention;
Fig. 5 is a schematic perspective view of the vehicle drive unit according to the embodiment of the present invention;
Fig. 6 is a schematic side view of the vehicle drive unit according to the embodiment of the present invention; and
Fig. 7 is a schematic top view of the vehicle drive unit according to the embodiment of the present invention.

### DETAILED DESCRIPTION

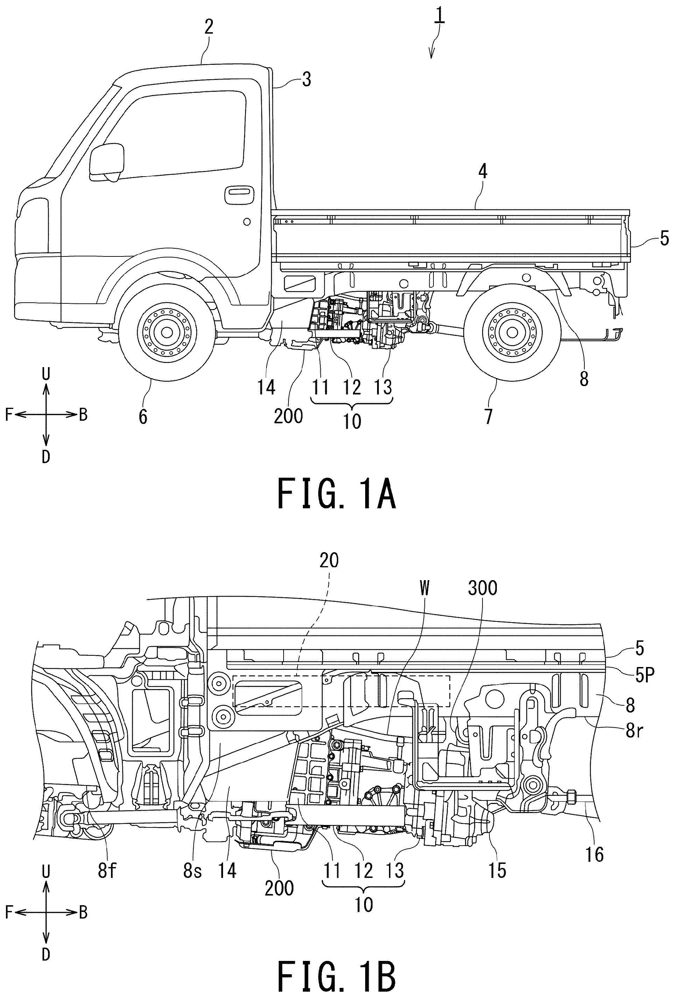

Embodiments of a vehicle drive unit according to the present invention will be described with reference to Figs. 1 to 7. Additionally, same or corresponding structures in the drawings are denoted by a same reference sign. Furthermore, in the drawings, a front direction of a vehicle where the vehicle drive unit is mounted is indicated by a solid arrow F (Forward), a rear direction of the vehicle by a solid arrow B (Backward), a left direction of the vehicle by a solid arrow L (Leftward), a right direction of the vehicle by a solid arrow R (Rightward), an up direction of the vehicle by a solid arrow U (Upward), and a down direction of the vehicle by a solid arrow D (Downward).

Fig. 1A is a side view of a truck-type vehicle where the vehicle drive unit according to the embodiment of the present invention is mounted. Fig. 1B is a schematic enlarged side view showing the vehicle drive unit in Fig. 1A and its periphery.

As shown in Figs. 1A and 1B, a vehicle 1 is an electric vehicle, and includes a vehicle drive unit 10 and a battery unit 20. In the following, the vehicle drive unit 10 may sometimes be referred to simply as the drive unit 10. In the vehicle 1, an engine (internal combustion engine) and a gasoline tank of an engine vehicle are replaced by the drive unit 10 and the battery unit 20. The drive unit 10 can be about half the size of a drive unit including an engine and a transmission. Accordingly, attachment to the truck-type vehicle 1 where a region where vehicle components can be attached is limited is facilitated, and the degree of freedom of layout of vehicle components is increased. The drive unit 10 is attached to a lower part behind a cabin 2 of the vehicle 1, and the battery unit 20 is disposed above and near the drive unit 10.

The vehicle 1 includes the cabin 2 where a driver's seat is arranged, a deck 4 corresponding to a load carrying platform arranged behind a cabin back panel 3, a deck floor 5, front wheels 6, and rear wheels 7. The drive unit 10 is mounted on a lower part the deck floor 5. Two side frames 8 that are arranged on left and right sides of a vehicle body of the vehicle 1 while extending in a vehicle front-back direction are arranged on a lower part of a deck panel 5P forming a lower end portion of the deck floor 5 where a load or the like is to be placed, and a crossmember 9 that extends in a vehicle width direction on a lower part of the vehicle body of the vehicle 1 and that connects the two side frames 8 is arranged at a position behind the cabin 2.

The drive unit 10 includes an inverter 11, an electric motor 12, and a speed reducer 13.

A DC voltage is applied to the inverter 11 via a high-voltage harness W that is wiring extending from the battery unit 20. A charger (not shown) for charging the battery unit 20 is provided on a lower part of the deck 4, on the left side of the vehicle 1. The battery unit 20 and the charger are connected by wiring (not shown). The charger is provided with a power feeding port for normal charging, and a power feeding port for rapid charging.

The side frame 8 includes a front frame portion 8f, a rising portion 8s, and a rear frame portion 8r. The front frame portion 8f is arranged at a lower front part of the vehicle 1. The rising portion 8s is inclined upward at a predetermined angle from the front frame portion 8f, and the rear frame portion 8r is arranged on a lower part of the deck floor 5 while extending from the rising portion 8s. At a front part of the drive unit 10, a guard 200 is provided below the rising portion 8s of the side frame 8. An attachment section 300 as a rear mount is provided on an upper surface on a rear side of the drive unit 10. The attachment section 300 is attached to a rear crossmember (not shown) installed between the rear frame portions 8r. That is, a rear side of the drive unit 10 is supported, via the attachment section 300, by the rear crossmember, and thus by the two side frames 8.

A bracket 14 for attaching a front portion of the drive unit 10 is provided at the rising portion 8s of the side frame 8. That is, the inverter 11 of the drive unit 10 is covered by the rising portion 8s of the side frame 8 and the bracket 14.

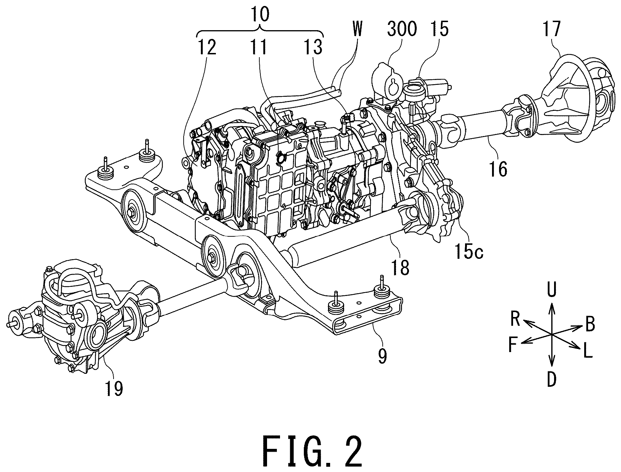

Fig. 2 is a schematic perspective view showing an external appearance of a drive mechanism that is mounted on the vehicle shown in Figs. 1A and 1B.

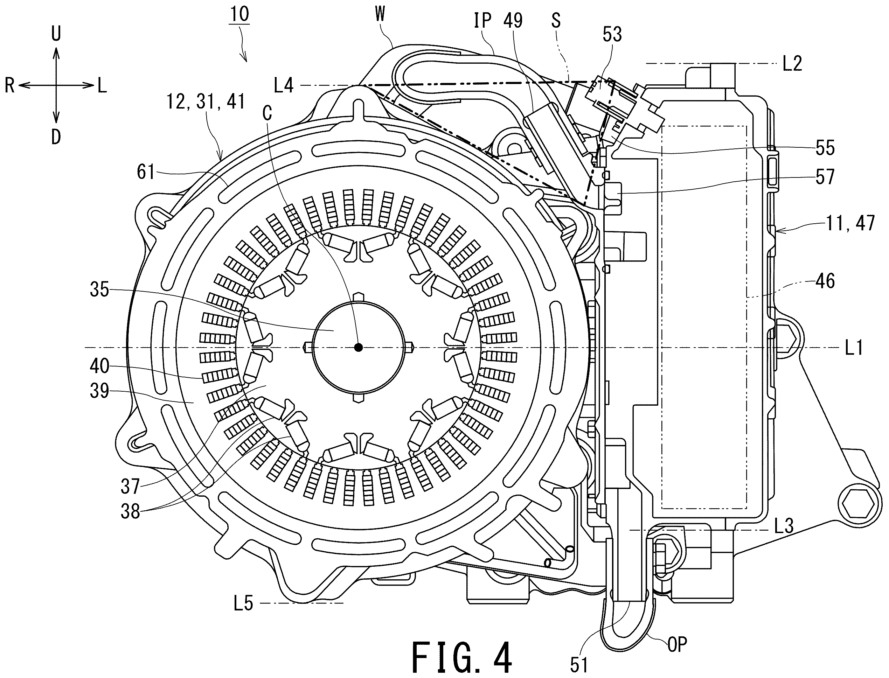

Fig. 2 shows a drive mechanism of the vehicle 1. The vehicle 1 is a rear-wheel drive vehicle where the rear wheels 7 are driven. A rotational speed of a motor shaft 35 (see Fig. 4) of the electric motor 12 is reduced by the speed reducer 13, and is then transmitted to a propeller shaft 16 for driving the rear wheels 7 via a transmission mechanism 15. A rotational force of the propeller shaft 16 is transmitted from a differential mechanism 17 on a rear wheel side to the rear wheel 7 via a rear-wheel drive shaft (not shown). A chain 15c is provided on the transmission mechanism 15 via a rotating gear or the like, and a rotational force is transmitted to a front-wheel shaft 18 for driving the front wheel 6. A rotational force of the front-wheel shaft 18 is transmitted from a differential mechanism 19 on a front wheel side to the front wheel 6 via a front-wheel drive shaft (not shown).

In the present embodiment, the truck-type vehicle 1 is, but does not have to be, driven by the rear wheels. For example, the vehicle 1 may instead be driven by the front wheels. The present embodiment may be applied to full-time four-wheel drive (4WD), or may be applied to a vehicle that can be switched from four-wheel drive to front wheel drive or rear wheel drive. The differential mechanism 19 on the front wheel side may be provided with a function for allowing switching between whether to allow a rotational force of the electric motor 12 to be transmitted to the front wheels 6 or not, so as to allow switching between two-wheel drive and four-wheel drive.

In the following, the drive unit 10 will be described in detail.

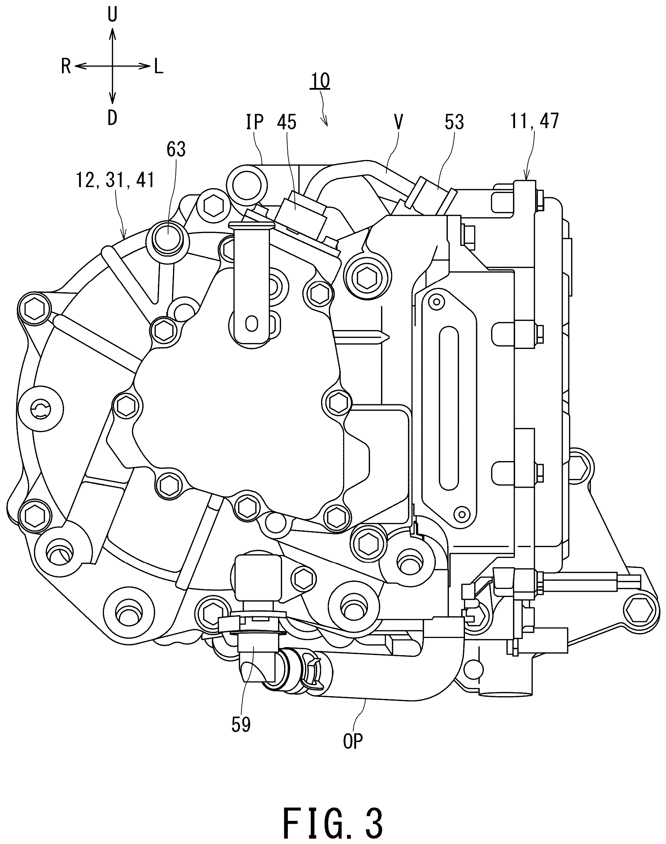

Fig. 3 is a schematic front view of the vehicle drive unit according to the embodiment of the present invention.

Fig. 4 is a schematic cross-sectional front view of the vehicle drive unit according to the embodiment of the present invention.

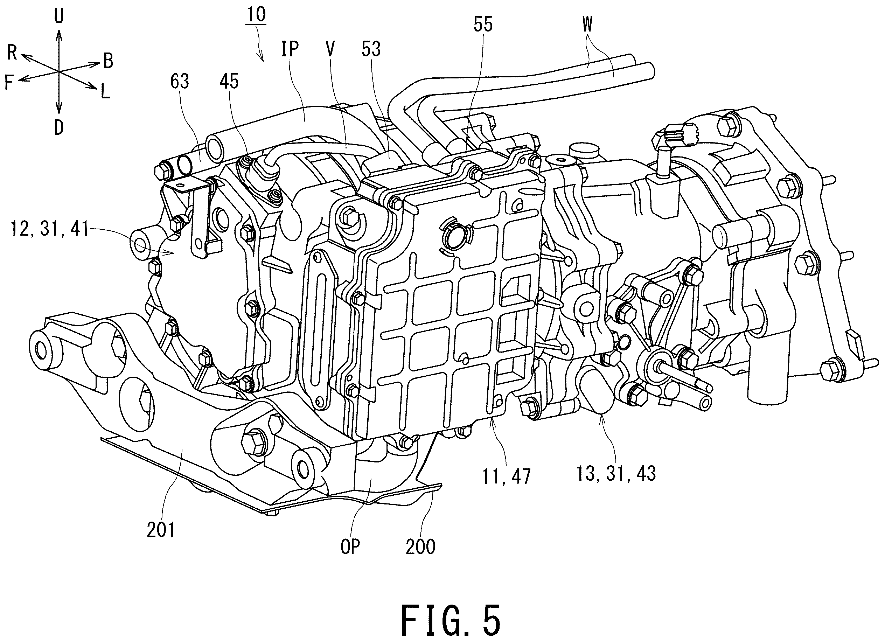

Fig. 5 is a schematic perspective view of the vehicle drive unit according to the embodiment of the present invention.

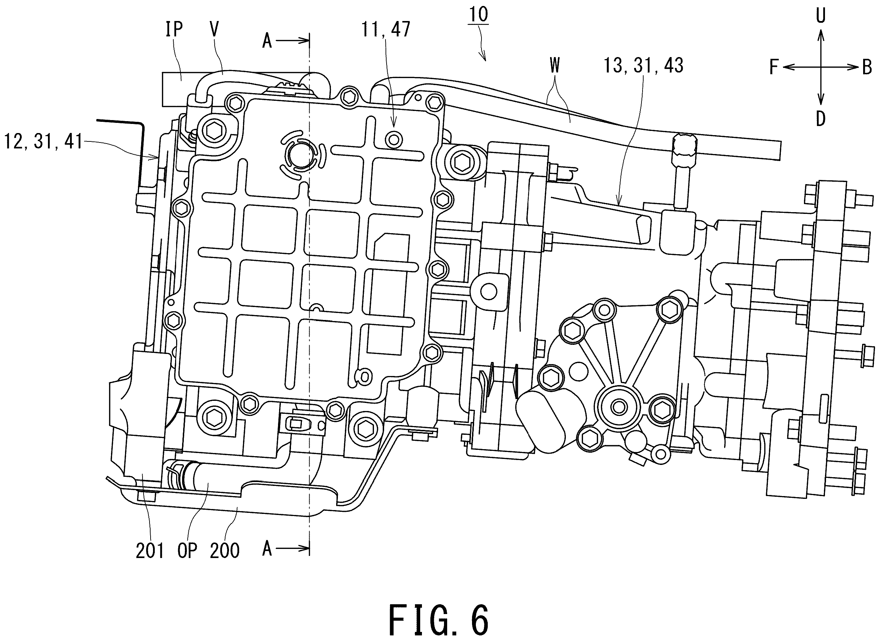

Fig. 6 is a schematic side view of the vehicle drive unit according to the embodiment of the present invention.

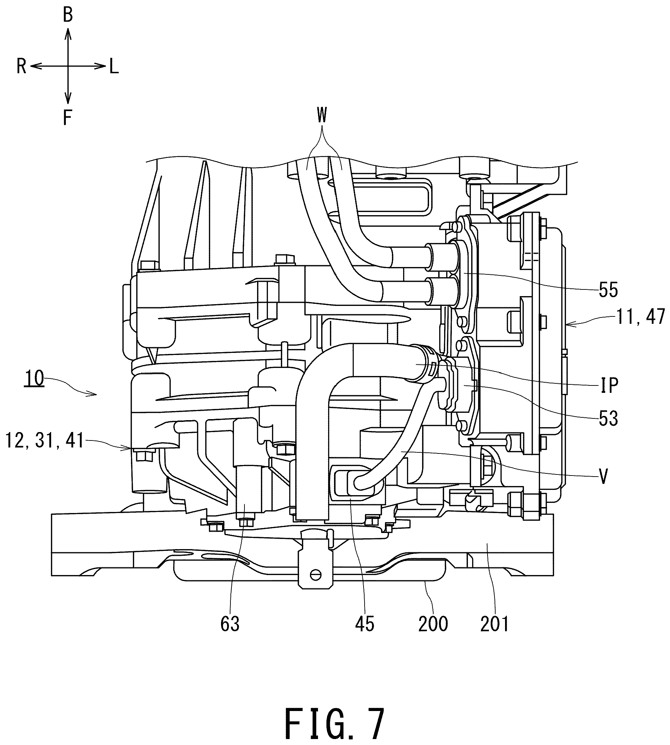

Fig. 7 is a schematic top view of the vehicle drive unit according to the embodiment of the present invention.

Additionally, for the sake of description, Figs. 5 to 7 show the guard 200 and a bracket 201, which are not shown in Fig. 3. Furthermore, a cross-sectional front view in Fig. 4 is a cross-sectional view taken along A-A in Fig. 6, along a plane perpendicular to the vehicle front-back direction, and is a cross-sectional view not showing the guard 200. The bracket 201 is provided on a lower side of a front surface of the drive unit 10, and is a member for fixing the drive unit 10 to the crossmember 9.

As shown in Figs. 3 to 7, the drive unit 10 includes, in addition to the inverter 11, the electric motor 12, and the speed reducer 13, a case 31 for housing the electric motor 12 and the speed reducer 13.

The drive unit 10 further includes a resolver (not shown) configured to detect a rotational position of the electric motor 12.

The electric motor 12 generates a driving force for the vehicle 1. In other words, the electric motor 12 generates a rotational force as a driving source of the vehicle 1. For example, the electric motor 12 is a permanent magnet synchronous motor of an interior magnet type. The electric motor 12 is arranged in a manner extending in the vehicle front-back direction. As shown in Fig. 4, the electric motor 12 includes the motor shaft 35 that is rotatable, a rotor 37 fixed to the motor shaft 35, and a stator 39 having a cylindrical shape, inside which the motor shaft 35 and the rotor 37 are arranged. The motor shaft 35, the rotor 37, and the stator 39 extend in the vehicle front-back direction. The rotor 37 includes a plurality of permanent magnets 38. The stator 39 includes a coil 40.

The speed reducer 13 reduces the rotational speed of the motor shaft 35 of the electric motor 12, and amplifies the rotational force (torque) of the electric motor 12. The speed reducer 13 may be configured as a transmission including a plurality of gears.

The case 31 includes a motor housing section 41 for housing the electric motor 12, and a speed reducer housing section 43 for housing the speed reducer 13.

The motor housing section 41 is positioned in front of the speed reducer housing section 43. The motor housing section 41 has a substantially cylindrical shape that extends in the vehicle front-back direction. A wiring connection section 45 is provided at an upper end of the motor housing section 41, the wiring connection section 45 being for connecting a resolver harness V for electrically connecting the resolver and the inverter 11. In the present embodiment, the wiring connection section 45 is provided at an upper left end of the motor housing section 41. The wiring connection section 45 protrudes leftward and upward.

The speed reducer housing section 43 is positioned behind the motor housing section 41.

The inverter 11 includes an inverter circuit 46 (see Fig. 4), and drives the electric motor 12 by converting DC power supplied from the battery unit 20 to AC power. Furthermore, the inverter 11 may include a converter circuit (not shown). In this case, the inverter 11 converts AC power generated by the electric motor 12 at the time of braking of the vehicle 1 to DC power, and charges the battery unit 20. Furthermore, the inverter 11 may include a DC-DC converter circuit (not shown) for converting a voltage level of power supplied from the battery unit 20.

Moreover, the inverter 11 includes an inverter case 47 for housing electrical components at least including the inverter circuit 46.

Furthermore, the inverter 11 includes a first pipe connection section 49 (see Fig. 4) to which a cooling water inlet pipe IP through which cooling water for cooling the inverter 11 flows is connected, and a second pipe connection section 51 (see Fig. 4) to which a cooling water outlet pipe OP through which cooling water flows after cooling the inverter 11 is connected. Moreover, the inverter 11 includes a first wiring connection section 53 to which the resolver harness V electrically connecting the inverter circuit 46 and the resolver is connected, and a second wiring connection section 55 to which the high-voltage harness W electrically connecting the inverter circuit 46 and the battery unit 20 as a driving power source of the electric motor 12 is connected. The first pipe connection section 49, the second pipe connection section 51, the first wiring connection section 53, and the second wiring connection section 55 are each provided on the inverter case 47.

The inverter case 47 is arranged next to the motor housing section 41. Openings with a matching size are formed in parts, of the inverter case 47 and the motor housing section 41, that are next to each other. The inverter circuit 46 and the electric motor 12 are electrically connected by internal wiring passing through the openings. AC power output from the inverter circuit 46 is supplied to the electric motor 12 by the internal wiring.

The inverter case 47 has a substantially cuboid shape. In the present embodiment, the inverter case 47 is arranged next to the motor housing section 41, on an outer left side of the motor housing section 41 in the vehicle width direction. However, such an example is not restrictive, and the inverter case 47 may instead be arranged next to the motor housing section 41, on an outer right side of the motor housing section 41 in the vehicle width direction. That is, the inverter case 47 may be arranged to be next to one of outer sides of the motor housing section 41 in the vehicle width direction.

The first pipe connection section 49 guides cooling water flowing from the cooling water inlet pipe IP to a cooling water path 57 (see Fig. 4) provided inside the inverter case 47.

The second pipe connection section 51 guides the cooling water that passed through the cooling water path 57 of the inverter case 47 to the cooling water outlet pipe OP. Additionally, the cooling water outlet pipe OP is connected to a pipe connection section 59 (see Fig. 3) provided at the motor housing section 41. The cooling water that passed through the cooling water outlet pipe OP flows from the pipe connection section 59 into a cooling water path 61 (see Fig. 4) provided inside the motor housing section 41, and cools the electric motor 12. After cooling the electric motor 12, the cooling water flows to a pipe (not shown) connected to an outlet pipe 63 provided at an upper end of the motor housing section 41.

The first wiring connection section 53 is electrically connected to the inverter circuit 46 inside the inverter case 47.

The second wiring connection section 55 is electrically connected to the inverter circuit 46 inside the inverter case 47.

Generally, pipes and wiring are connected to a drive unit adopted by electric and hybrid vehicles. A certain space is necessary to route the pipes and the wiring. Accordingly, because of the pipes and wiring connected to the drive unit, mountability of the drive unit on a vehicle may be reduced.

Accordingly, as shown in Fig. 4, the first pipe connection section 49 to which the cooling water inlet pipe IP where the cooling water flows is connected is placed in a wedge-shaped space S created between the motor housing section 41 and the inverter case 47.

More specifically, in the example in Fig. 4, the first pipe connection section 49 is arranged in the wedge-shaped space S while being inclined obliquely upward away from a right outer surface of the inverter case 47. With the first pipe connection section 49 arranged in such a manner, an arrangement path can be secured for the cooling water inlet pipe IP in and around the wedge-shaped space S. That is, the cooling water inlet pipe IP connected to the first pipe connection section 49 does not excessively protrude in a space above the drive unit 10 to reduce the space above the drive unit 10. Accordingly, a necessary gap to the battery unit 20 placed above the drive unit 10 can be easily secured, and mountability of the drive unit 10 on the vehicle 1 can be increased.

It is preferred that a center of the inverter case 47 be at a position higher than a rotation center C of the motor shaft 35 of the electric motor 12 in a vehicle up-down direction.

More specifically, as shown in Fig. 4, with respect to the inverter case 47, a distance between a horizontal line L1 passing through the rotation center C of the motor shaft 35 and a horizontal line L2 passing through an uppermost end of the inverter case 47 is greater than a distance between the horizontal line L1 and a horizontal line L3 passing through a lowermost end of the inverter case 47. The wedge-shaped space S can thus be sufficiently secured between the inverter case 47 and the motor housing section 41. Accordingly, the arrangement path can be reliably secured for the cooling water inlet pipe IP in and around the wedge-shaped space S.

Additionally, the lowermost end of the inverter case 47 is a lowest part of the inverter case 47 excluding the second pipe connection section 51 provided on the inverter case 47. Furthermore, the center of the inverter case 47 in the vehicle up-down direction is a middle position between the horizontal line L2 passing through the uppermost end of the inverter case 47 and the horizontal line L3 passing through the lowermost end of the inverter case 47.

It is preferred that a height of the uppermost end of the inverter case 47 be at or higher than a height of an uppermost end of the motor housing section 41.

More specifically, as shown in Fig. 4, in the vehicle up-down direction, a height of the horizontal line L2 passing through the uppermost end of the inverter case 47 is at or higher than a height of a horizontal line L4 passing through the uppermost end of the motor housing section 41. The wedge-shaped space S can thus be sufficiently secured between the inverter case 47 and the motor housing section 41. That is, the first pipe connection section 49 can be reliably arranged in the wedge-shaped space S.

A height of an uppermost end of the first pipe connection section 49 to which the cooling water inlet pipe IP where the cooling water flows is connected is preferably at or lower than the height of the uppermost end of the motor housing section 41. The arrangement path can thus be reliably secured for the cooling water inlet pipe IP in and around the wedge-shaped space S. The cooling water inlet pipe IP can thereby reliably be prevented from protruding excessively above the drive unit 10.

The first wiring connection section 53 to which the resolver harness V for electrically connecting the inverter circuit 46 and the resolver is connected is preferably placed in the wedge-shaped space S created between the motor housing section 41 and the inverter case 47. This allows an arrangement path to be secured in and around the wedge-shaped space S not only for the cooling water inlet pipe IP but also for the resolver harness V. That is, the resolver harness V connected to the first wiring connection section 53 does not protrude excessively into a space above the drive unit 10 to reduce the space above the drive unit 10.

The second wiring connection section 55 to which the high-voltage harness W for electrically connecting the inverter circuit 46 and the battery unit 20 as a driving power source of the electric motor 12 is connected is preferably placed in the wedge-shaped space S created between the motor housing section 41 and the inverter case 47. This allows an arrangement path to be secured in and around the wedge-shaped space S not only for the cooling water inlet pipe IP and the resolver harness V but also for the high-voltage harness W. That is, the high-voltage harness W connected to the second wiring connection section 55 does not protrude excessively into a space above the drive unit 10 to reduce the space above the drive unit 10.

The first pipe connection section 49 to which the cooling water inlet pipe IP is connected is preferably at a position lower than the first wiring connection section 53 to which the resolver harness V is connected.

More specifically, an outer diameter of the cooling water inlet pipe IP connected to the first pipe connection section 49 is normally greater than an outer diameter of a wiring portion of the resolver harness V connected to the first wiring connection section 53. Furthermore, although depending on a material of the cooling water inlet pipe IP, an allowable radius of curvature of the cooling water inlet pipe IP is also normally greater than an allowable radius of curvature of the wiring portion of the resolver harness V. That is, the arrangement path is more difficult to secure for the cooling water inlet pipe IP than for the resolver harness V. By placing the first pipe connection section 49 to which the cooling water inlet pipe IP for which it is difficult to secure the arrangement path is connected at a position lower than the first wiring connection section 53, the arrangement path can be more easily secured for the cooling water inlet pipe IP. Accordingly, the cooling water inlet pipe IP can be reliably prevented from protruding excessively above the drive unit 10 while also preventing the resolver harness V from protruding excessively above the drive unit 10.

The first wiring connection section 53 to which the resolver harness V is connected is preferably at a position more to the front than the second wiring connection section 55 to which the high-voltage harness W is connected.

More specifically, if the first wiring connection section 53 is at a position more to the back than the second wiring connection section 55, the resolver harness V and the high-voltage harness W cross each other, in top view, above the drive unit 10. When the resolver harness V and the high-voltage harness W cross each other, the resolver harness V or the high-voltage harness W protrudes excessively above the drive unit 10 to reduce the space above the drive unit 10. When the first wiring connection section 53 is at a position more to the front than the second wiring connection section 55, crossing of the resolver harness V and the high-voltage harness W in top view can be avoided. That is, the resolver harness V and the high-voltage harness W do not reduce the space above the drive unit 10.

The second pipe connection section 51 to which the cooling water outlet pipe OP through which cooling water flows after cooling the inverter circuit 46 is connected is preferably provided on a lower end of the inverter case 47 that is at a position higher than a lowermost end of the motor housing section 41.

More specifically, as shown in Fig. 4, in relation to the vehicle up-down direction, the second pipe connection section 51 is provided on a lower end of the inverter case 47 positioned above a height of a horizontal line L5 passing through the lowermost end of the motor housing section 41. Accordingly, the cooling water outlet pipe OP connected to the second pipe connection section 51 does not protrude excessively below the drive unit 10 to reduce a space below the drive unit 10. That is, a height of the drive unit 10, mounted on the vehicle 1, above the ground can be secured. Furthermore, as shown in Fig. 6, even when the guard 200 for protecting the cooling water outlet pipe OP is provided at the drive unit 10, a height from a lowermost end of the guard 200 to the ground can be sufficiently secured.

A height of a lowermost end of the second pipe connection section 51 to which the cooling water outlet pipe OP is connected is preferably at or higher than a height of the lowermost end of the motor housing section 41. This can reliably prevent the cooling water outlet pipe OP connected to the second pipe connection section 51 from protruding excessively below the drive unit 10. That is, the height of the drive unit 10 above the ground is reliably secured.

As described above, the vehicle drive unit 10 according to the present embodiment includes the first pipe connection section 49 that is placed in the wedge-shaped space S created between the motor housing section 41 and the inverter case 47. The first pipe connection section 49 placed in the wedge-shaped space S secures the arrangement for the cooling water inlet pipe IP in and around the wedge-shaped space S. That is, the first pipe connection section 49 prevent the cooling water inlet pipe IP from excessively protruding in a space above the drive unit 10 and reducing the space above the drive unit 10. Accordingly, the drive unit 10 can secure a necessary gap to the battery unit 20 placed above the drive unit 10. Therefore, the drive unit 10 can have excellent mountability on the vehicle 1.

In the vehicle drive unit 10 according to the present embodiment, the center of the inverter case 47 is at a position higher than a rotation center C of the motor shaft 35 of the electric motor 12 in a vehicle up-down direction. The wedge-shaped space S can be sufficiently secured between the inverter case 47 and the motor housing section 41 by specifically defining the positional relationship between the center of the inverter case 47 in the vehicle up-down direction and the rotation center C of the motor shaft 35 in this manner. Accordingly, the drive unit 10 can reliably secure the arrangement path for the cooling water inlet pipe IP in and around the wedge-shaped space S. Therefore, the drive unit 10 can further improve mountability of the drive unit 10 on the vehicle 1 by preventing the cooling water inlet pipe IP from protruding excessively above the drive unit 10 and placing the cooling water inlet pipe IP at a relatively low position.

In the vehicle drive unit 10 according to the present embodiment, a height of the uppermost end of the inverter case 47 is at or higher than a height of an uppermost end of the motor housing section 41. The wedge-shaped space S can thus be sufficiently secured between the inverter case 47 and the motor housing section 41. Accordingly, the drive unit 10 can further improve mountability of the drive unit 10 on the vehicle 1 by preventing the cooling water inlet pipe IP from protruding excessively above the drive unit 10 and placing the cooling water inlet pipe IP at a relatively low position.

In the vehicle drive unit 10 according to the present embodiment, a height of an uppermost end of the first pipe connection section 49 to which the cooling water inlet pipe IP is connected is at or lower than the height of the uppermost end of the motor housing section 41. The arrangement path can thus be reliably secured for the cooling water inlet pipe IP in and around the wedge-shaped space S. Accordingly, the drive unit 10 can prevent the cooling water inlet pipe IP from protruding excessively above the drive unit 10 to further improve mountability of the drive unit 10 on the vehicle 1.

The vehicle drive unit 10 according to the present embodiment includes the first wiring connection section 53, positioned in the wedge-shaped space S, to which the resolver harness V is connected. The first wiring connection section 53 positioned in the wedge-shaped space S secures an arrangement path for the resolver harness V in and around the wedge-shaped space S. In other words, the first wiring connection section 53 prevents the resolver harness V from protruding excessively into the space above the drive unit 10 and reducing the space above the drive unit 10. Accordingly, the drive unit 10 can reliably secure a necessary gap to the battery unit 20 placed above the drive unit 10. Therefore, the drive unit 10 can further improve mountability of the drive unit 10 on the vehicle 1.

The vehicle drive unit 10 according to the present embodiment includes the second wiring connection section 55, positioned in the wedge-shaped space S, to which the high-voltage harness W is connected. The second wiring connection section 55 positioned in the wedge-shaped space S secures an arrangement path for the high-voltage harness W in and around the wedge-shaped space S. In other words, the second wiring connection section 55 prevents the high-voltage harness W from protruding excessively into the space above the drive unit 10 and reducing the space above the drive unit 10. Accordingly, the drive unit 10 can reliably secure a necessary gap to the battery unit 20 placed above the drive unit 10. Therefore, the drive unit 10 can further improve mountability of the drive unit 10 on the vehicle 1.

In the vehicle drive unit 10 according to the present embodiment, the first pipe connection section 49 to which the cooling water inlet pipe IP is connected is at a position lower than the first wiring connection section 53 to which the resolver harness V is connected. This configuration can readily secure an arrangement pass for the cooling water inlet pipe IP, which is harder to route than the resolver harness V. Accordingly, the drive unit 10 can reliably prevent the cooling water inlet pipe IP from protruding excessively above the drive unit 10, while also preventing the resolver harness V from protruding excessively above the drive unit 10.

Since the first pipe connection section 49 is positioned below the first wiring connection section 53, the size of the inverter case 47 in the vehicle front-back direction can be reduced compared to the case where the first pipe connection section 49 and the first wiring connection section 53 are arranged side by side in the vehicle front-back direction. Accordingly, the size of the inverter 11, and thus the size of the drive unit 10, can be further reduced.

In the vehicle drive unit 10 according to the present embodiment, the first wiring connection section 53 to which the resolver harness V is connected is at a position more to the front than the second wiring connection section 55 to which the high-voltage harness W is connected. This configuration can prevent the resolver harness V and the high-voltage harness W from crossing when viewed from above. That is, the resolver harness V and the high-voltage harness W do not intersect and the resolver harness V or the high-voltage harness W does not protrude excessively above the drive unit 10. Accordingly, the drive unit 10 can reliably secure the arrangement path for the resolver harness V and the high-voltage harness W in and around the wedge-shaped space S. Therefore, the drive unit 10 can further improve mountability of the drive unit 10 on the vehicle 1.

The length of the resolver harness V and the high-voltage harness W can be shortened compared to the case where the first wiring connection section 53 is located behind the second wiring connection section 55 by positioning the first wiring connection section 53 forward of the second wiring connection section 55.

The vehicle drive unit 10 according to the present embodiment includes the second pipe connection section 51, provided on a lower end of the inverter case 47 that is at a position higher than a lowermost end of the motor housing section 41, to which a cooling water outlet pipe OP is connected. Such a second pipe connection section 51 prevents the cooling water outlet pipe OP from protruding excessively downward from the drive unit 10. Consequently, the drive unit 10 can not only secure a gap between the drive unit 10 and the battery unit 20 above the drive unit 10, but also secure the height of the drive unit 10 above the ground. In other words, the drive unit 10 prevents pipes and wires connected to the drive unit 10 from protruding excessively above and below the drive unit 10 to further improve mountability on the vehicle 1.

In the vehicle drive unit 10 according to the present embodiment, a height of a lowermost end of the second pipe connection section 51 to which the cooling water outlet pipe OP is connected is at or higher than a height of the lowermost end of the motor housing section 41. This can reliably prevent the cooling water outlet pipe OP connected to the second pipe connection section 51 from protruding excessively below the drive unit 10. Accordingly, the drive unit 10 can reliably secure the height of the drive unit 10 above the ground to further improve mountability on the vehicle 1.

Therefore, the drive unit 10 according to the present embodiment can have excellent mountability on the vehicle 1.

Additionally, in the present embodiment, the drive unit 10 includes the case 31 and the inverter case 47 that are separate members, but the case 31 and the inverter case 47 may be integrally formed as one case as long as a space corresponding to the wedge-shaped space S can be formed. That is, the inverter 11 and the electric motor 12 may be housed inside one case.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

### REFERENCE SIGNS LIST

- 1: vehicle
- 2: cabin
- 3: cabin back panel
- 4: deck
- 5: deck floor
- 5P: deck panel
- 6: front wheel
- 7: rear wheel
- 8: side frame
- 8f: front frame portion
- 8r: rear frame portion
- 8s: rising portion
- 9: crossmember
- 10: vehicle drive unit (drive unit)
- 11: inverter
- 12: electric motor
- 13: speed reducer
- 14: bracket
- 15: transmission mechanism
- 15c: chain
- 16: propeller shaft
- 17: differential mechanism
- 18: front-wheel shaft
- 19: differential mechanism
- 20: battery unit
- 31: case
- 35: motor shaft
- 37: rotor
- 38: permanent magnets
- 39: stator
- 40: coil
- 41: motor housing section
- 43: speed reducer housing section
- 45: wiring connection section
- 46: inverter circuit
- 47: inverter case
- 49: first pipe connection section
- 51: second pipe connection section
- 53: first wiring connection section
- 55: second wiring connection section
- 57: cooling water path
- 59: pipe connection section
- 61: cooling water path
- 63: outlet pipe
- 200: guard
- 201: bracket
- 300: attachment section
- IP: cooling water inlet pipe
- L1, L2, L3, L4, L5: horizontal line
- OP: cooling water outlet pipe
- S: wedge-shaped space
- V: resolver harness
- W: high-voltage harness

## Claims

1. A vehicle drive unit (10) comprising:
an electric motor (12) including a motor shaft (35) extending in a vehicle front-back direction;
a case (31) including a motor housing section (41) having a substantially cylindrical shape, the motor housing section (41) being for housing the electric motor (12);
an inverter circuit (46) that is electrically connected to the electric motor (12);
an inverter case (47) having a substantially cuboid shape and placed next to one outer side of the motor housing section (41) in a vehicle width direction, the inverter case (47) being for housing the inverter circuit (46); and
a first pipe connection section (49), provided on the inverter case (47), to which a cooling water inlet pipe (IP) where cooling water flows is connected, wherein
the first pipe connection section (49) is positioned in a wedge-shaped space (S) created between the motor housing section (41) and the inverter case (47).

2. The vehicle drive unit (10) according to claim 1, wherein a center of the inverter case (47) is at a position higher than a rotation center of the motor shaft (35) in a vehicle up-down direction.

3. The vehicle drive unit (10) according to claim 1 or 2, wherein a height of an uppermost end of the inverter case (47) is at or higher than a height of an uppermost end of the motor housing section (41).

4. The vehicle drive unit (10) according to any one of claims 1 to 3, wherein a height of an uppermost end of the first pipe connection section (49) is at or lower than a height of an uppermost end of the motor housing section (41).

5. The vehicle drive unit (10) according to any one of claims 1 to 4, further comprising:
a resolver provided in the motor housing section (41), the resolver being configured to detect a rotational position of the electric motor (12); and
a first wiring connection section (53), provided on the inverter case (47) and positioned in the wedge-shaped space (S), to which a resolver harness (V) for electrically connecting the inverter circuit (46) and the resolver is connected.

6. The vehicle drive unit (10) according to any one of claims 1 to 5, further comprising a second wiring connection section (55), provided on the inverter case (47) and positioned in the wedge-shaped space (S), to which a high-voltage harness (W) for electrically connecting the inverter circuit (46) and a battery unit (20) as a driving power source of the electric motor (12) is connected.

7. The vehicle drive unit (10) according to claim 5, wherein the first pipe connection section (49) is at a position lower than the first wiring connection section (53).

8. The vehicle drive unit (10) according to claim 5 or 7, further comprising a second wiring connection section (55), provided on the inverter case (47) and positioned in the wedge-shaped space (S), to which a high-voltage harness (W) for electrically connecting the inverter circuit (46) and a battery unit (20) as a driving power source of the electric motor (12) is connected, wherein
the first wiring connection section (53) is at a position more to front than the second wiring connection section (55).

9. The vehicle drive unit (10) according to any one of claims 1 to 8, further comprising a second pipe connection section (51), provided on a lower end of the inverter case (47) that is at a position higher than a lowermost end of the motor housing section (41), to which a cooling water outlet pipe (OP) through which the cooling water flows after cooling the inverter circuit (46) is connected.

10. The vehicle drive unit (10) according to claim 9, wherein a height of a lowermost end of the second pipe connection section (51) is at or higher than a height of the lowermost end of the motor housing section (41).
